# EUROPEAN PATENT APPLICATION

(11) **EP 4 764 912 A1**
(43) Date of publication of application: **24.06.2026**
(21) Application number: 25199559.3
(22) Date of filing: 02.09.2025
(51) Int. Cl.: G06F 21/32, G06Q 20/40

(54) **BIOMETRIC REGISTRATION SYSTEM AND BIOMETRIC REGISTRATION METHOD**

(30) Priority: 20.12.2024 JP 2024225739
(71) Applicant: Hitachi, Ltd., Tokyo 100-8280 (JP)
(72) Inventor: MATSUDA, Yusuke, Tokyo, 100-8280 (JP); MIURA, Naoto, Tokyo, 100-8280 (JP); KITANE, Keiji, Tokyo, 100-8280 (JP); NAGASAKA, Akio, Tokyo, 100-8280 (JP); NONOMURA, Yo, Tokyo, 100-8280 (JP)
(74) Representative: MERH-IP Matias Erny Reichl Hoffmann Patentanwälte PartG mbB

(57) **Abstract**

A biometric registration system receives personal information on a user, and control a first acquisition device to acquire first biometric data on the user; extracts a first feature amount from the first biometric data; registers pre-registration data in which the personal information and the first feature amount are associated with each other; controls, in a case where a registration procedure using a registration device is started, a second acquisition device to acquire second biometric data and third biometric data; extracts a second feature amount and a third feature amount from the second biometric data and the third biometric data; compares the first feature amount and the second feature amount to each other; and registers registration data in which the personal information included in the pre-registration data corresponding to the first feature amount that matches the second feature amount and the third feature amount are associated with each other.

## Description

### CLAIM OF PRIORITY

The present application claims priority from Japanese patent application No. 2024-225739 filed on December 20, 2024, the content of which is hereby incorporated by reference into this application.

### BACKGROUND

This invention relates to a biometric registration system and a biometric registration method.

The following related art is included as background art in this technical field. In JP 2019-075021 A, there is described, as in Abstract, a registration system including application information storage means for storing application information on a registrant, determination means for reading registrant information included in a medium presented by the registrant and determining whether or not the registrant information matches the application information stored in the application information storage means, and registration means for, when the registrant information matches the application information, acquiring biometric information on the registrant and registering the biometric information in association with the application information.

### SUMMARY

In recent years, advancements in biometric authentication technologies have improved authentication performance, and biometric authentication has begun to be used in services requiring high security, such as payment services. The biometric authentication for identifying a user himself or herself from among a large number of people requires highly accurate acquisition of a biometric feature, and hence dedicated biometric information acquisition devices are used.

Each biometric information acquisition device is equipped with a light source that emits light having a specific wavelength, an image pickup unit that picks up an image of the light having that wavelength, and the like. Therefore, the biometric information acquisition devices are rarely owned by an individual, and in most cases, are installed in shops and the like that provide the services. Users are required to visit the shops and the like to perform biometric information registration and authentication work.

Such restrictions on where to perform the registration work impair user convenience. In addition, at a time of performing the biometric information registration work, users are often confused due to unfamiliarity with how to present their living body parts, thereby resulting in a problem of time-consuming registration.

This invention has an object to facilitate registration work and reduce a time required for registration.

A representative example of the present invention disclosed in this specification is as follows: a biometric registration system comprises a computing device; a storage device coupled to the computing device; and a network interface coupled to the computing device. The biometric registration system is coupled to a terminal owned by a user and a registration device installed at a shop of a business operator that provides a service using biometric authentication. The terminal includes a first acquisition device configured to acquire biometric data on the user. The registration device includes a second acquisition device configured to acquire biometric data on the user. The biometric registration system is configured to: receive input of personal information on the user from the terminal, and control the first acquisition device to acquire first biometric data on the user who has input the personal information; extract a first feature amount from the first biometric data; register, in the storage device, pre-registration data in which the personal information and the first feature amount are associated with each other; control, in a case where a registration procedure using the registration device is started, the second acquisition device to acquire, from the user who performs the registration procedure, second biometric data for extracting a feature amount to be used for comparison to the first feature amount and third biometric data for extracting a feature amount to be used at a time of using the service; extract a second feature amount and a third feature amount from the second biometric data and the third biometric data, respectively; compare the first feature amount included in the pre-registration data and the second feature amount to each other; and/or register, in the storage device, registration data in which the personal information included in the pre-registration data corresponding to the first feature amount that matches the second feature amount and the third feature amount are associated with each other.

According to at least one embodiment of this invention, work of registering a highly accurate biometric feature can be facilitated, and a time required for registration can be reduced. Objects, configurations, and effects other than those described above become more apparent from the following descriptions of embodiments of this invention.

The present invention can be appreciated by the description which follows in conjunction with the following figures, wherein:
FIG. 1 is a block diagram for illustrating an overall configuration of a biometric registration system according to a first embodiment;
FIG. 2 is a block diagram for illustrating an example of a functional configuration of a biometric registration device in the first embodiment;
FIG. 3 is a diagram for illustrating an example of a flow of registration work in the biometric registration system according to the first embodiment;
FIG. 4 is a diagram for illustrating an example of a flow of the registration work in the biometric registration system according to the first embodiment;
FIG. 5 is a diagram for illustrating an example of a flow of the registration work in the biometric registration system according to the first embodiment;
FIG. 6 is a flow chart for illustrating an example of pre-registration processing in the first embodiment;
FIG. 7 is a flow chart for illustrating an example of main registration processing in the first embodiment;
FIG. 8A and FIG. 8B are flow charts for illustrating an example of main registration processing in the first embodiment;
FIG. 9 is examples of posture patterns of the hand/fingers in a second embodiment;
FIG. 10 is examples of posture patterns of the hand/fingers in a second embodiment; and
FIG. 11A and FIG. 11B are views for illustrating examples of an image pickup method for the hand/fingers in the second embodiment.

### DETAILED DESCRIPTION OF THE PREFERRED EMBODIMENTS

Now, embodiments of this invention are described with reference to the accompanying drawings. The following description and drawings are merely illustrative examples for understanding this invention, and certain elements may be omitted or simplified as appropriate for the sake of clarity. This invention can also be implemented in various other forms. Each component may be singular or plural unless otherwise specified.

In configurations of this invention described below, the same or similar components or functions are denoted by the same reference numerals, and redundant description thereof is omitted here.

Notations of, for example, "first," "second," and "third" herein are assigned to distinguish between components, and do not necessarily limit the number or order of those components.

The term "biometric feature" as used herein refers to information representing a feature derived from each of anatomically distinct living body parts, such as veins in the hand and fingers, fingerprints, a pattern of joints, a skin texture, a face, an ear, or an iris. The biometric feature may also be information representing a feature emitted from a living body part, such as a voice. The biometric feature may also be information representing a plurality of features extracted from information including a mixture of a plurality of anatomically classified parts of a living body and obtained through division by any method.

Hitherto, in order to use a service such as a payment service using biometric authentication, a user is required to first visit a shop in which a biometric information acquisition device is installed and register his or her biometric information and personal information including his or her full name and address in advance. Such registration work as described above has posed a barrier to expansion of users due to constraints in terms of location and time.

In at least one embodiment of this invention, biometric information and personal information are registered in the following procedure. First, a user registers his or her personal information in a database for pre-registration through use of a terminal such as a smartphone or a PC at home or the like. Then, the user visits a shop in which a biometric information acquisition device is installed, and registers, in a database for main registration, his or her biometric information acquired at the shop and the personal information already registered in the database for pre-registration. According to the at least one embodiment of this invention, a user can set his or her personal information without being restricted by time or location, and is only required to register his or her biometric information at the shop, thereby enabling reduction in labor required for the registration work.

In order to achieve such registration work as described above, it is required to verify that the user who has registered the personal information in the database for pre-registration and the user who performs the registration work at the shop are the same person. In view of this, at a time of acquiring personal information, a registration system acquires biometric information through image pickup using a terminal. The acquired biometric information is registered in the database for pre-registration in association with the personal information. During the registration work at the shop, the biometric information associated with the personal information is compared to the biometric information acquired through use of the biometric information acquisition device to verify identity of the user.

There is a problem in that comparison between the biometric information acquired through image pickup by the terminal and the biometric information acquired through image pickup by the biometric information acquisition device is difficult due to differences in an image pickup environment, an image pickup method, and the like. In view of this, the registration system uses the biometric information acquisition device to acquire biometric information for registration and biometric information for comparison. The biometric information for comparison is acquired in an image pickup environment similar to the image pickup environment of the terminal and by an image pickup method similar to the image pickup method of the terminal. The use of the biometric information for comparison facilitates the comparison to the biometric information associated with the personal information.

### [First Embodiment]

In a first embodiment of this invention, a method of registering personal information acquired in advance through use of a terminal or the like and biometric data for registration acquired at a shop that provides a service in association with each other is described.

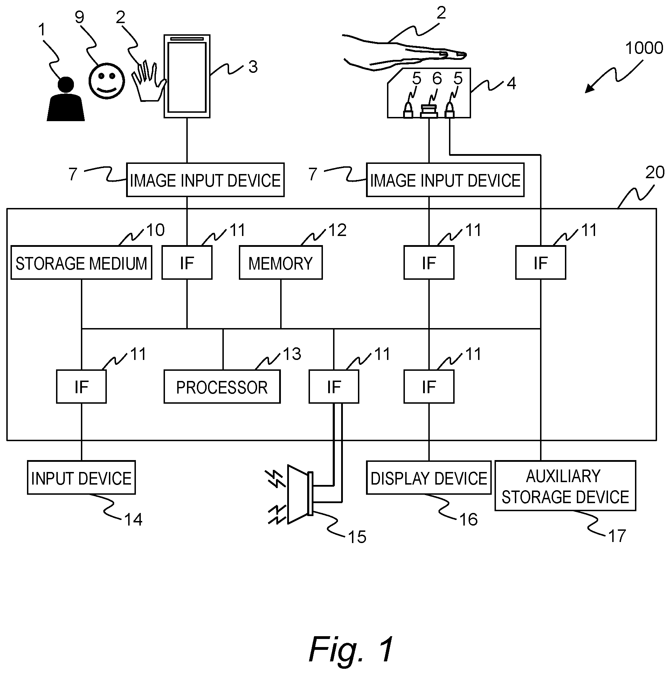

FIG. 1 is a block diagram for illustrating an overall configuration of a biometric registration system 1000 according to the first embodiment.

The biometric registration system 1000 according to the first embodiment includes a pre-registration device 3, a main registration device 4, image input devices 7, an input device 14, a speaker 15, a display device 16, an auxiliary storage device 17, and a biometric registration device 20.

The biometric registration device 20 includes a storage medium 10, interfaces (IFs) 11, a memory 12, and a processor 13. The biometric registration device 20 may also include the main registration device 4, the image input devices 7, the input device 14, the speaker 15, the display device 16, and the auxiliary storage device 17.

The processor 13 is a computing device, and executes a program stored in the memory 12. The processor 13 executes various programs, to thereby implement respective functions provided by the biometric registration device 20.

The memory 12 includes a ROM, which is a non-volatile storage element, and a RAM, which is a volatile storage element. The ROM stores an unchanging program (for example, BIOS) and the like. The RAM is a high-speed and volatile storage element such as a dynamic random access memory (DRAM), and temporarily stores a program that is executed by a processor and data that is used when a program is executed. In addition, the memory 12 temporarily stores images and the like input from the image input devices 7.

The program that is executed by the processor 13 is provided to the biometric registration device 20 through a removable medium (such as a CD-ROM or a flash memory) or a network, and is stored in the non-volatile auxiliary storage device 17, which is a non-transitory storage medium. For that reason, the storage medium 10 may include an interface for reading data from the removable medium.

The interfaces 11 each function as an input interface for receiving input of information from an external device and/or an output interface for outputting information to an external device. Specifically, the interfaces 11 include, for example, ports for coupling the biometric registration device 20 to external devices such as the pre-registration device 3, the main registration device 4, the image input devices 7, the input device 14, the speaker 15, the display device 16, and the auxiliary storage device 17.

The interfaces 11 also include a function of a communication interface for the biometric registration device 20 to communicate to/from an external device through a communication network (not shown). The communication interface is, for example, a device that performs communication in accordance with the IEEE 802.3 standard when the communication network is a wired local area network (LAN), and is a device that performs communication in accordance with the IEEE 802.11 standard when the communication network is a wireless LAN.

The auxiliary storage device 17 is, for example, a large-capacity and non-volatile storage device such as a hard disk drive (HDD) or a solid state drive (SSD), and stores a program that is executed by a processor. Specifically, the program is read out from the auxiliary storage device 17, loaded into the memory 12, and executed by the processor, to thereby implement each of the functions of the biometric registration device 20.

The auxiliary storage device 17 also stores a database 32 for pre-registration that stores pre-registration data on users and a database 31 for main registration that stores registration data.

The pre-registration data and the registration data are each, for example, data in which feature amounts (biometric features) extracted from an image of a face, a finger, or a finger vein pattern are associated with the personal information.

The display device 16 is, for example, a liquid crystal display, and is an output device that displays information acquired from the biometric registration device 20, posture guidance information for a living body part, and information on a posture determination result and the like.

The input device 14 is, for example, a keyboard or a touch panel. The input device 14 receives input of information from a user, and outputs the information to the biometric registration device 20.

The speaker 15 is an output device that outputs information received from the biometric registration device 20, for example, in the form of an audio signal such as voice.

The biometric registration device 20 is a computer system configured on one physical computer, or on a plurality of logically or physically configured computers, and may operate on a virtual machine constructed over a plurality of physical computing resources. For example, each functional unit may operate on a separate physical or logical computer, or a plurality of functional units may be combined and operate on a single physical or logical computer.

The pre-registration device 3 picks up images of specific parts of a living body (living body parts) such as a hand and fingers (hereinafter referred to simply as "hand/fingers") 2 and a face 9 of a registrant 1. In the first embodiment, the images of the living body parts serve as the biometric data. The pre-registration device 3 is a terminal such as a smartphone or a PC, and picks up images of the living body parts through use of a built-in image pickup device or an externally coupled image pickup device. The living body parts the images of which are to be picked up by the pre-registration device 3 may include an iris and the back or palm of a hand.

The image input devices 7 acquire the images picked up by the pre-registration device 3 and the main registration device 4, and outputs the acquired images to the biometric registration device 20. The image input devices 7 are each, for example, any one of various reader devices (for example, a video capture board) for reading images.

The main registration device 4 picks up images of the living body parts such as the hand/fingers 2 and the face 9 of the registrant 1. The living body parts the images of which are to be picked up by a biometric image pickup device 6 may include an iris and the back or palm of a hand. The main registration device 4 includes a plurality of light sources 5 and the biometric image pickup device 6. The main registration device 4 may include a plurality of biometric image pickup devices 6.

The biometric image pickup device 6 picks up an image of the living body part. The biometric image pickup device 6 is an optical sensor capable of picking up an image of light having a single or a plurality of wavelengths, and may be a monochrome camera or a color camera. Further, the biometric image pickup device 6 may be a multispectral camera capable of simultaneously picking up an image of ultraviolet light or infrared light in addition to visible light. Further, the biometric image pickup device 6 may be a distance camera capable of measuring a distance to a subject, or may be a stereo camera combining a plurality of cameras.

When the living body part the image of which is to be picked up is the hand/fingers 2, the biometric image pickup device 6 may pick up an image of one finger, or may pick up an image of a plurality of fingers.

The light sources 5 are each, for example, a light-emitting element such as a light emitting diode (LED), and irradiates the living body part of the registrant 1 presented to the main registration device 4 with light. The light source 5 may be capable of emitting light at various wavelengths, and may also be capable of simultaneously emitting light at a plurality of wavelengths. The light source 5 may be capable of emitting light suitable for obtaining transmissive light through the living body part, or may be capable of emitting light suitable for obtaining reflective light from the living body part. The light source 5 may be formed of a plurality of light-emitting elements, and may have a function that enables light emission intensity of each of the plurality of light-emitting elements to be adjusted by the biometric registration device 20.

In the first embodiment, an example in which the hand/fingers 2 and the face 9 are used as the living body parts is described. Therefore, the main registration device 4 includes the light sources 5 and the biometric image pickup device 6, but when another living body part is used, the main registration device 4 includes a sensor for acquiring a biometric feature of the other living body part.

In the first embodiment, a biometric information registration system including a plurality of components is described, but in place of the biometric information registration system, a biometric authentication device having some of the plurality of components mounted in a casing may be responsible for functions of the biometric information registration system. The pre-registration device 3 and the main registration device 4 may each be a personal authentication device that executes registration processing or authentication processing. The registration processing, the authentication processing, or processing for generating or extracting a feature amount may be executed by an external device coupled to a pre-registration device.

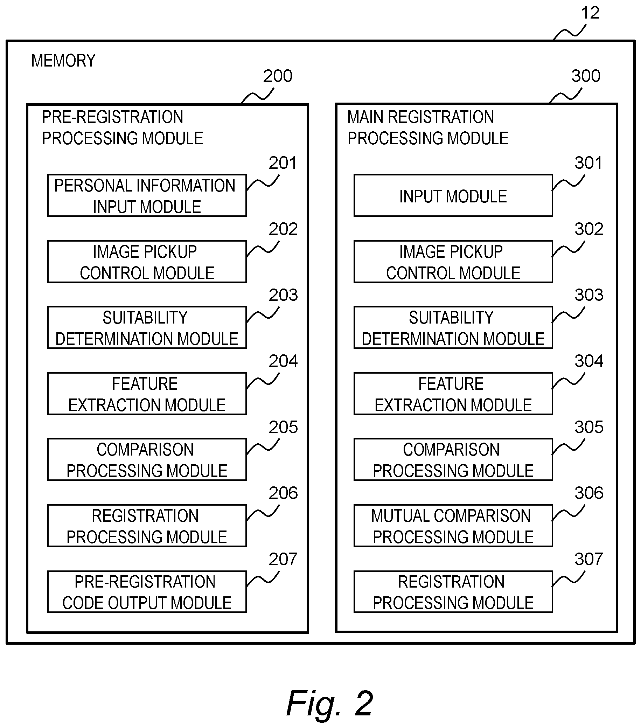

FIG. 2 is a block diagram for illustrating an example of a functional configuration of the biometric registration device 20 in the first embodiment. Functional modules of the biometric registration device 20 are implemented by programs stored in the memory 12.

The memory 12 of the biometric registration device 20 includes a pre-registration processing module 200 and a main registration processing module 300.

The pre-registration processing module 200 includes a personal information input module 201, an image pickup control module 202, a suitability determination module 203, a feature extraction module 204, a comparison processing module 205, a registration processing module 206, and a pre-registration code output module 207.

The personal information input module 201 receives input of personal information with which a registrant applies at a time of the pre-registration. The personal information includes the full name and the address of the registrant, and is input through use of the pre-registration device 3 or the like.

The image pickup control module 202 controls the pre-registration device 3 so as to pick up an image of the living body part under appropriate conditions.

The suitability determination module 203 analyzes various types of attribute information such as a posture of the living body part in the picked-up image, and determines suitability of the image.

The feature extraction module 204 extracts a feature amount from the image acquired from the pre-registration device 3.

The comparison processing module 205 performs comparison between images through use of the feature amount extracted by the feature extraction module 204.

The registration processing module 206 registers the personal information and the feature amount extracted from the image picked up by the pre-registration device 3 in the database 32 for pre-registration in association with each other.

The pre-registration code output module 207 outputs a pre-registration code for identifying the pre-registration data.

The main registration processing module 300 includes an input module 301, an image pickup control module 302, a suitability determination module 303, a feature extraction module 304, a comparison processing module 305, a mutual comparison processing module 306, and a registration processing module 307.

The input module 301 receives input of the pre-registration code for identifying the pre-registration data on the registrant.

The image pickup control module 302 controls the main registration device 4 so as to pick up an image of the living body part under appropriate conditions.

The suitability determination module 303 analyzes various types of attribute information such as a posture of the living body part in the picked-up image, and determines suitability of the image.

The feature extraction module 304 extracts a feature amount from the image acquired from the main registration device 4.

The comparison processing module 305 performs comparison between images through use of the feature amount extracted by the feature extraction module 304.

The mutual comparison processing module 306 compares the image picked up by the pre-registration device 3 to the feature amount extracted from the image acquired from the main registration device 4.

The registration processing module 307 registers the personal information and the feature amount extracted from the image picked up by the main registration device 4 in the database 31 for main registration in association with each other.

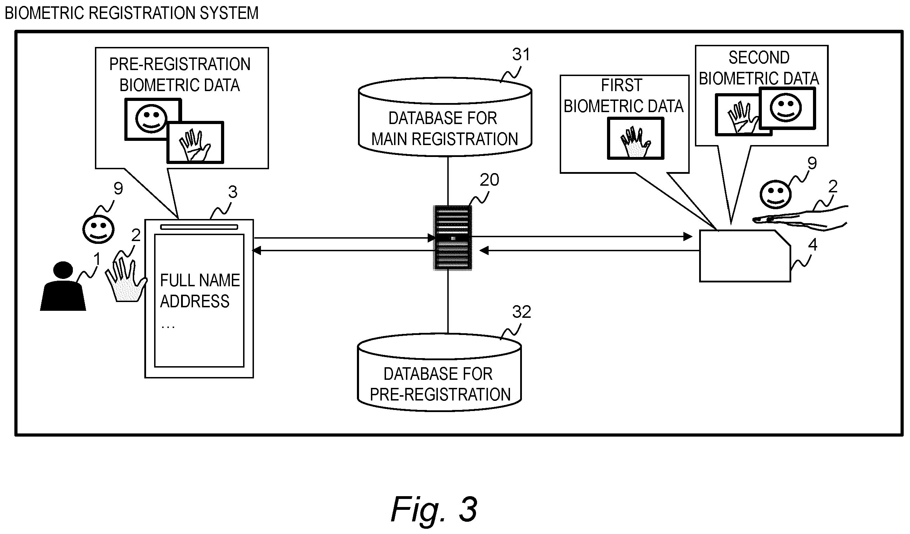

FIG. 3 is a diagram for illustrating an example of a flow of the registration work in the biometric registration system 1000 according to the first embodiment.

The biometric registration device 20 receives input of the personal information, and controls the pre-registration device 3 to acquire an image of the hand/fingers 2, the face 9, or the like of the registrant 1. The biometric registration device 20 extracts a feature amount (pre-registration biometric data) from the acquired image. The biometric registration device 20 registers, in the database 32 for pre-registration, the pre-registration data in which the personal information and the pre-registration biometric data are associated with each other.

The biometric registration device 20 controls the main registration device 4 to acquire, as first biometric data, an image of the living body part to be used at a time of the biometric authentication, and acquire, as second biometric data, an image of the same living body part as that relating to the pre-registration biometric data. The biometric registration device 20 compares a feature amount extracted from the acquired second biometric data to the pre-registration biometric data. When the feature amount extracted from the second biometric data matches the pre-registration biometric data, the biometric registration device 20 registers, in the database 31 for main registration, the registration data in which a feature amount (registration biometric data) extracted from the first biometric data and the personal information associated with the pre-registration biometric data are associated with each other.

The first biometric data and the second biometric data are acquired from living body parts of the same person. The living body parts may be the same or different. In a case of acquiring the first biometric data and the second biometric data from the same living body part, images acquired by different image pickup methods, such as by changing the wavelength of the light with which the living body part is irradiated by the light sources 5 of the main registration device 4, are used as the first biometric data and the second biometric data.

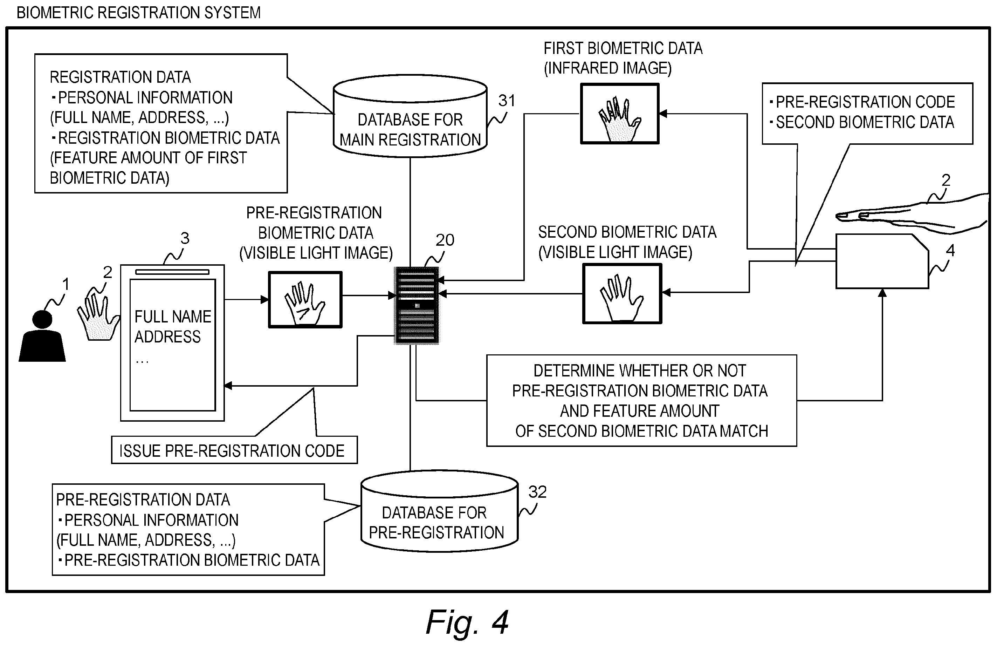

FIG. 4 is a diagram for illustrating an example of a flow of the registration work in the biometric registration system 1000 according to the first embodiment.

In FIG. 4, detailed registration processing in the case of acquiring the first biometric data and the second biometric data from the same living body part is described.

The biometric registration device 20 receives input of the personal information, and controls the pre-registration device 3 so as to pick up an image by emitting the visible light to acquire a visible light image of the hand/fingers 2 of the registrant 1. The biometric registration device 20 extracts a feature amount (pre-registration biometric data) from the acquired image. The biometric registration device 20 registers, in the database 32 for pre-registration, the pre-registration data in which the personal information and the pre-registration biometric data are associated with each other. The biometric registration device 20 also issues a pre-registration code for identifying the pre-registration biometric data at a time of the main registration.

When the registrant 1 performs the main registration, the biometric registration device 20 receives the pre-registration code. When the biometric registration device 20 has successfully identified the pre-registration data on the registrant 1, the biometric registration device 20 controls the main registration device 4 so as to pick up an image by emitting the infrared light to acquire an infrared image of the hand/fingers 2 of the registrant 1 as the first biometric data, and controls the main registration device 4 so as to pick up an image by emitting the visible light to acquire a visible light image of the hand/fingers 2 of the registrant 1 as the second biometric data. The biometric registration device 20 compares a feature amount extracted from the acquired second biometric data to the pre-registration biometric data. When the feature amount extracted from the second biometric data matches the pre-registration biometric data, the biometric registration device 20 registers, in the database 31 for main registration, the registration data in which a feature amount (registration biometric data) extracted from the first biometric data and the personal information associated with the pre-registration biometric data are associated with each other.

The first biometric data is used for data comparison for verifying the identity of the user when a service using biometric authentication is to be provided after biometric registration. In FIG. 4, the first biometric data is the infrared image picked up by irradiating the hand/fingers with the infrared light.

The comparison using the second biometric data becomes easier with an image picked up under the same conditions (at the same wavelength) as those used at the time of the pre-registration. In FIG. 4, the pre-registration device 3 is used to acquire the visible light image. Therefore, the comparison using the second biometric data becomes easier with the visible light image picked up through use of the visible light than with the infrared image to be used in actual authentication, and a time required for registration can be reduced.

The biometric registration device 20 may acquire the first biometric data and the second biometric data by controlling the switching of the wavelengths of light emitted by the light sources 5 of the main registration device 4, or may acquire the first biometric data and the second biometric data by performing control to simultaneously emit the infrared light and the visible light and performing spectral processing or the like on the acquired biometric data. The spectral processing is an image processing technology that enables one image to be separated into a plurality of images each corresponding to light of a specific wavelength band. In this manner, through acquisition of the first biometric data and the second biometric data at the same timing, it is possible to solve issues such as spoofing.

As the pre-registration code, for example, a QR code ("QR Code" is a trademark; the same applies below) that directs the user to a pre-registration app or a QR code that directs the user to a pre-registration website may be displayed on the main registration device 4, or a URL to the pre-registration app and website may be transmitted to an email address of the registrant 1 input of which has been received.

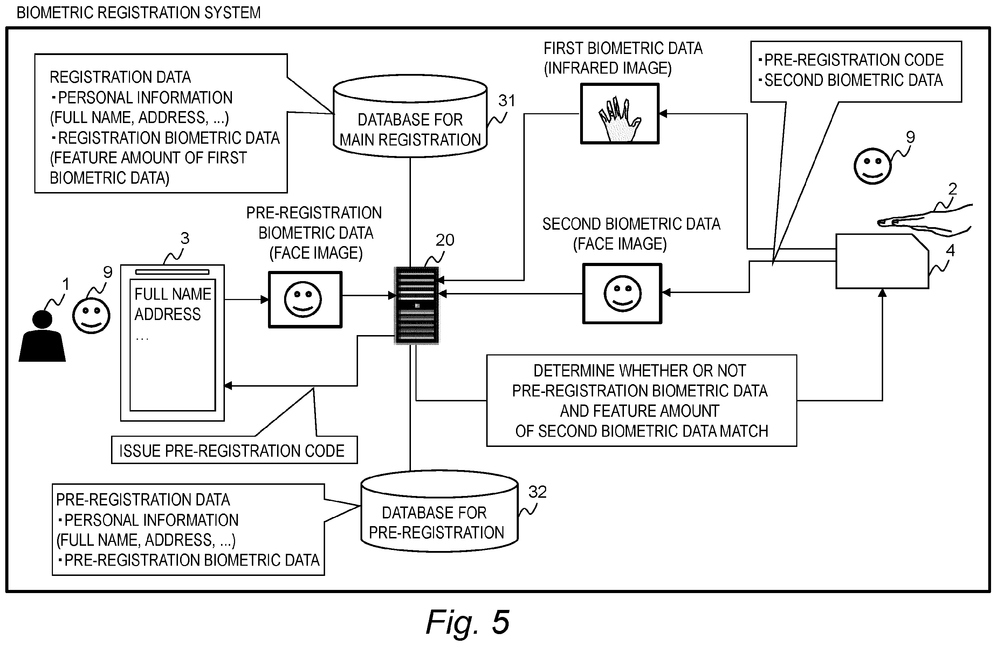

FIG. 5 is a diagram for illustrating an example of a flow of the registration work in the biometric registration system 1000 according to the first embodiment.

In FIG. 5, the registration processing in a case of acquiring the first biometric data and the second biometric data from different living body parts of the registrant 1 is described.

The biometric registration device 20 receives input of the personal information, and controls the pre-registration device 3 so as to pick up an image by emitting the visible light to acquire an image of the face 9 of the registrant 1. The biometric registration device 20 extracts a feature amount (pre-registration biometric data) from the acquired image. The biometric registration device 20 registers, in the database 32 for pre-registration, the pre-registration data in which the personal information and the pre-registration biometric data are associated with each other, and then issues a pre-registration code for identifying the pre-registration biometric data at a time of the main registration.

When the registrant 1 performs the main registration, the biometric registration device 20 receives the pre-registration code. When the biometric registration device 20 has successfully identified the pre-registration biometric data on the registrant 1, the biometric registration device 20 controls the main registration device 4 so as to pick up an image by emitting the infrared light to acquire an infrared image of the hand/fingers 2 of the registrant 1 as the first biometric data, and controls the main registration device 4 so as to pick up an image by emitting the visible light to acquire a visible light image of the face 9 of the registrant 1 as the second biometric data. The biometric registration device 20 compares a feature amount extracted from the acquired second biometric data to the pre-registration biometric data. When the feature amount extracted from the second biometric data matches the pre-registration biometric data, the biometric registration device 20 registers, in the database 31 for main registration, the registration data in which a feature amount (registration biometric data) extracted from the first biometric data and the personal information associated with the pre-registration biometric data are associated with each other.

The biometric registration device 20 may acquire the first biometric data and the second biometric data from different body parts at the same timing or at different timings.

In the case of acquiring the first biometric data and the second biometric data at different timings, the biometric registration device 20 uses an image pickup device externally coupled to the main registration device 4 to pick up an image of an entire body of the registrant in accordance with a time of picking up each of the first biometric data and the second biometric data. Through acquisition of this entire body image, it is possible to verify that the first biometric data and the second biometric data belong to the same person, and it is possible to prevent fraud such as spoofing.

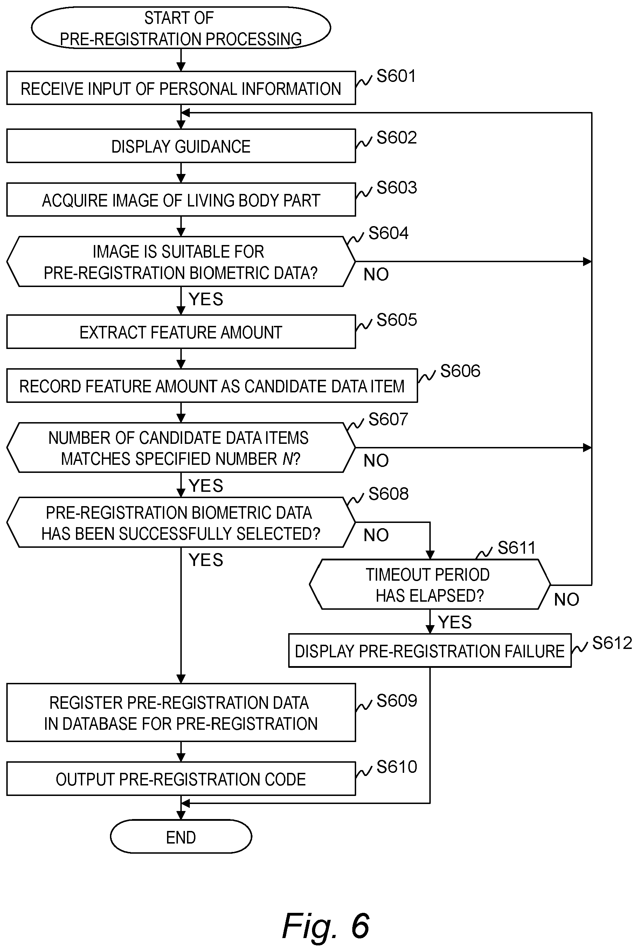

FIG. 6 is a flow chart for illustrating an example of pre-registration processing in the first embodiment. In FIG. 6, registration of the pre-registration data using a hand/finger image is described as an example.

The pre-registration processing module 200 starts the pre-registration by receiving, from the registrant, information indicating that the pre-registration app installed in advance in the pre-registration device 3 has been launched, or access to the pre-registration website through the Internet.

The personal information input module 201 receives input of the personal information including the full name, the address, and other member-related information from the registrant (S601).

The image pickup control module 202 displays a preview image of a camera of the pre-registration device 3 and guidance for position alignment of hand/fingers, on a screen of the pre-registration device 3 or on a display device coupled to the pre-registration device 3 (S602).

The image pickup control module 202 controls camera parameters, light source intensity, and other settings of the pre-registration device 3 to acquire a hand/finger image (S603).

The suitability determination module 203 determines whether or not the hand/finger image acquired from the pre-registration device 3 is suitable for the pre-registration biometric data (S604). This determination is carried out based on factors obtained by performing image processing or the like on the acquired hand/finger image, the factors including presence or absence of the hand/fingers, a posture of the hand/fingers, brightness of the hand/finger image, and an information amount of a biometric feature included in a hand/finger region. Determination criteria for the suitability are set in advance.

When it is determined that the acquired hand/finger image is not suitable for the pre-registration biometric data (when NO in S604), the pre-registration processing module 200 returns the process to S602 to again display the guidance for image pickup.

When it is determined that the acquired hand/finger image is suitable for the pre-registration biometric data (when YES in S604), the feature extraction module 204 extracts a feature amount for pre-registration (S605).

The feature extraction module 204 extracts a feature from the hand/finger image so as to generate such a feature amount as to enable highly accurate mutual authentication with the second biometric data obtained through image pickup by the main registration device 4. For example, when the second biometric data of the main registration device 4 is a hand/finger image picked up by irradiating the hand/fingers with green visible light, the feature extraction module 204 extracts a feature from an R component image that is close to the second biometric data among component images of an RGB image of a visible-light hand/finger image picked up by the pre-registration device 3.

The feature extraction module 204 may extract the feature amount at high speed through use of a computer provided with a GPU.

After the extraction of the feature amount, the pre-registration processing module 200 records the feature amount in a work area as a candidate data item (S606).

The pre-registration processing module 200 determines whether or not the number of candidate data items matches a specified number N (S607).

When the number of candidate data items does not match the specified number N (when NO in S607), the pre-registration processing module 200 returns the process to S602 to again display the guidance for image pickup.

When the number of candidate data items matches the specified number N (when YES in S607), the comparison processing module 205 compares a plurality of candidate data items to examine whether or not reproducible data has been successfully acquired, and determines whether the pre-registration biometric data can be selected from the plurality of candidate data items (S608).

This processing is processing for confirming that the candidate data items have been successfully acquired with stability. For example, the comparison processing module 205 compares the N candidate data items to one another, and when it has been successfully confirmed that comparison results sufficiently match one another, can select, as the pre-registration biometric data, a candidate data item that most matches the other candidate data items.

Further, due to the presence of a plurality of candidate data items, a candidate data item that most matches the other candidate data items can be selected as the pre-registration biometric data based on the posture of the living body part, the information amount of the biometric feature included in the hand/finger region, and the like used for suitability determination processing in S604.

One pre-registration biometric data item may be selected from among the plurality of candidate data items, or a plurality of pre-registration biometric data items that differ in, for example, the posture of the living body part may be selected as candidate data items. Due to the presence of a plurality of pre-registration biometric data items, it becomes easier to achieve a match with the second biometric data acquired through use of the main registration device 4 at a time of registration, and the time required for the registration can be reduced.

When the pre-registration biometric data has failed to be selected (when NO in S608), the pre-registration processing module 200 determines whether or not a predetermined time (timeout period) has elapsed since the start of the pre-registration processing (S611).

When it is determined that the timeout period has elapsed (when YES in S611), the pre-registration processing module 200 displays a failure in the pre-registration processing (S612), and ends the pre-registration processing.

When it is determined that the timeout period has not elapsed (when NO in S611), the pre-registration processing module 200 returns the process to S602 to again display the guidance for image pickup. At this time, the pre-registration processing module 200 erases all or some of the candidate data items recorded in the work area.

When the pre-registration biometric data has been successfully selected (when YES in S608), the registration processing module 206 registers, in the database 32 for pre-registration, the pre-registration data in which the personal information and the pre-registration biometric data are associated with each other (S609). At this time, the registration processing module 206 issues a pre-registration code, and assigns the pre-registration code to the registered data.

The pre-registration code output module 207 outputs the pre-registration code to the pre-registration device 3 (S610), and ends the pre-registration processing.

The suitability determination processing for the hand/finger image (S604) may be executed by the pre-registration device 3. A communication time required for transmitting a hand/finger image and receiving a determination result can be reduced, and hence a time required for the pre-registration processing can be reduced. Further, processing for extracting the feature amount (S605) may be carried out by the pre-registration device 3.

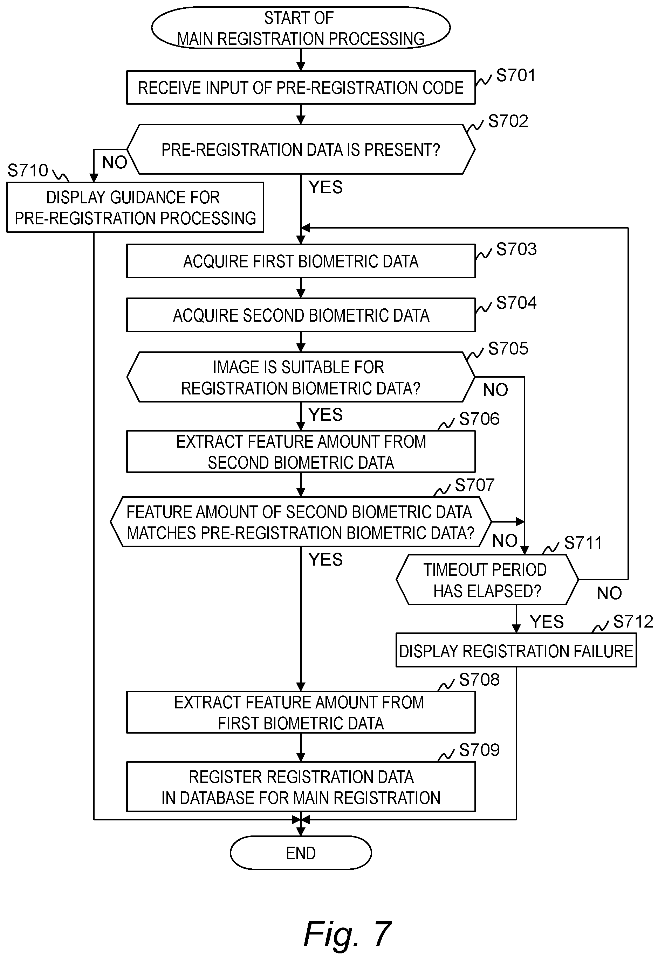

FIG. 7 is a flow chart for illustrating an example of main registration processing in the first embodiment. In FIG. 7, registration of the registration data, in which the feature amount extracted from the hand/finger image has been registered as the pre-registration biometric data, and the hand/finger images are used as the first biometric data and the second biometric data, is described as an example.

The input module 301 receives input of a pre-registration code from the main registration device 4 or an input device externally coupled to the main registration device 4 (S701).

The main registration processing module 300 searches the database 32 for pre-registration based on the pre-registration code, and determines whether or not the pre-registration data corresponding to the pre-registration code is present (S702).

When the pre-registration data is not present (when NO in S702), the main registration processing module 300 displays, on the main registration device 4, that the pre-registration processing is required (S710), and ends the main registration processing. For example, a QR code that directs the user to a pre-registration app or a QR code that directs the user to a pre-registration website may be displayed on the main registration device 4, or a URL to the pre-registration app and website may be transmitted to an email address of the registrant 1 input of which has been received.

When the pre-registration data is present (when YES in S702), the image pickup control module 302 controls camera parameters, light source intensity, and other settings of the main registration device 4 to acquire a hand/finger image as the first biometric data (S703).

The image pickup control module 302 controls the camera parameters, the light source intensity, and other settings of the main registration device 4 so as to facilitate the comparison to the pre-registration biometric data to acquire a hand/finger image as the second biometric data (S704).

In the hand/finger image picked up by the pre-registration device 3, blood vessels of the hand/fingers are often difficult to see, while patterns of wrinkles, melanin, and the like on the surface of the hand/fingers tend to be more noticeable. In this case, the image pickup control module 302 refers to image pickup information such as brightness, exposure, white balance, and light amount at the time of picking up the hand/finger image from which the pre-registration biometric data was extracted, and performs light source control and camera parameter adjustment to emit only the visible light so that the blood vessels are difficult to see and the wrinkles or the like of the epidermis are noticeable in the image pickup of the second biometric data.

The suitability determination module 303 determines whether the acquired hand/finger image is suitable for the registration biometric data based on the presence or absence of the hand/fingers, the posture of the hand/fingers, the brightness of the hand/finger image, the information amount of the biometric feature included in the hand/finger region, and the like which have been obtained by image processing or the like from the acquired hand/finger image (S705).

When it is determined that the acquired hand/finger image is not suitable for the registration biometric data (when NO in S705), the main registration processing module 300 determines whether or not a predetermined time (timeout period) has elapsed since the start of the main registration processing (S711).

When it is determined that the timeout period has not elapsed (when NO in S711), the main registration processing module 300 returns the process to S703 to again acquire the biometric data.

When it is determined that the timeout period has elapsed (when YES in S711), the main registration processing module 300 displays a registration failure (S712), and ends the registration processing.

When it is determined in S705 that the acquired hand/finger image is suitable for the registration biometric data (when YES in S705), the feature extraction module 304 extracts the feature amount from the second biometric data to facilitate the comparison to the pre-registration biometric data (S706).

For example, the feature extraction module 304 performs such feature extraction as to extract patterns of wrinkles, melanin, and the like on the epidermis and to avoid extracting the blood vessels or other features that are difficult to see.

The mutual comparison processing module 306 compares the pre-registration biometric data included in the retrieved pre-registration data to the feature amount extracted from the second biometric data, and determines whether or not the feature amount matches the pre-registration biometric data (S707). For example, when a similarity degree of the feature amount is larger than a threshold value, it is determined that the feature amount matches the pre-registration data. The threshold value can be freely set. For example, the threshold value is 80 percent.

When the feature amount extracted from the second biometric data does not match the pre-registration biometric data (when NO in S707), the main registration processing module 300 determines whether the timeout period has elapsed (S711).

When it is determined that the timeout period has not elapsed (when NO in S711), the main registration processing module 300 returns the process to S703 to again acquire the biometric data.

When it is determined that the timeout period has elapsed (when YES in S711), the main registration processing module 300 displays a registration failure (S712), and ends the main registration processing.

When, in S707, the feature amount extracted from the second biometric data matches the pre-registration biometric data (when YES in S707), the feature extraction module 304 extracts the feature amount from the first biometric data (S708).

The registration processing module 307 registers the registration data, in which the extracted feature amount and the personal information included in the retrieved pre-registration data are associated with each other, in the database 31 for main registration (S709), and ends the registration processing. The feature amount extracted from the second biometric data may be included in the registration data. It is possible to achieve a high-performance authentication system by performing authentication through use of different biometric data items.

(Variation 1) Through use of the pre-registration code, it is possible to easily identify the pre-registration data including the personal information input by the registrant 1. Meanwhile, problems that the pre-registration code may be forgotten or a medium on which the pre-registration code has been recorded may be lost are conceivable.

In view of this, the biometric registration device 20 may acquire the second biometric data through use of the main registration device 4 without receiving input of the pre-registration code, and may retrieve the pre-registration data by comparing the acquired second biometric data to a plurality of pre-registration biometric data items recorded in the database 32 for pre-registration. In this case, the biometric registration device 20 performs the above-mentioned comparison in S705.

The input of the pre-registration code can be omitted, and hence the registration work can be performed with a simpler operation, thereby leading to an expectation or reduction in registration time.

Further, an increase in the number of pre-registration data items recorded in the database 32 for pre-registration can be suppressed by setting a storage period for the pre-registration biometric data to a fixed period, and processing for comparison to the pre-registration biometric data can be sped up even when the pre-registration code is not used.

(Variation 2) In FIG. 7, the example in which the first biometric data and the second biometric data are picked up at the same timing, and when the feature amount extracted from the second biometric data matches the pre-registration biometric data, the feature amount extracted from the first biometric data is registered has been described. This processing procedure may be modified so that, when the feature amount extracted from the second biometric data matches the pre-registration biometric data, newly picked-up first biometric data is acquired.

When the second biometric data is picked up so as to facilitate the comparison to the pre-registration biometric data, the first biometric data picked up at the same timing may not be data acquired in an optimal state and environment for a biometric authentication system. In view of this, when the feature amount extracted from the second biometric data matches the pre-registration biometric data, the first biometric data is newly acquired through use of an image pickup method such as light source emission control for the biometric authentication system, thereby enabling operation in a higher-performance biometric authentication system.

(Variation 3) **In** FIG. 7, when the acquired first biometric data is suitable for the registration biometric data, the registration data is registered through use of the first biometric data. This processing procedure may be modified so that, when the first biometric data is determined to be unsuitable for the registration biometric data, the first biometric data is acquired until the first biometric data is newly determined to be suitable. Even when the first biometric data acquired at the same timing as the second biometric data cannot be directly registered, additional first biometric data is acquired to continue the registration work, thereby being able to achieve flexible registration processing for maintaining convenience and biometric authentication performance.

(Variation 4) In a case in which the first biometric data and the second biometric data are picked up at different timings, there is a concern of, for example, spoofing. Therefore, through acquisition of both the first biometric data and the second biometric data at different timings and comparison between the first biometric data and the second biometric data acquired at the different timings, it is possible to guarantee that the same person had his or her living body part subjected to image pickup at the different timings. As another method, the image pickup device externally coupled to the main registration device 4 may be used to pick up an image of an entire body of a person, and the image may be used to determine whether or not the same person is presenting his or her living body part to the main registration device 4.

(Variation 5) In FIG. 7, the registration of the registration data is not completed unless the pre-registration biometric data and the feature amount extracted from the second biometric data match. This processing procedure may be modified so that, when the input pre-registration code matches the personal information on the biometric registration device 20, a person who performed the pre-registration and a person who is presenting his or her living body part to the main registration device 4 are regarded as the same person, and the main registration device 4 is used to acquire the first biometric data and perform the registration work. In this case, the image pickup of the pre-registration biometric data at the time of the pre-registration and the image pickup of the second biometric data on the main registration device 4 can be omitted, thereby being able to further reduce labor required for the registration work, simplify the registration work, and reduce the time required for the registration.

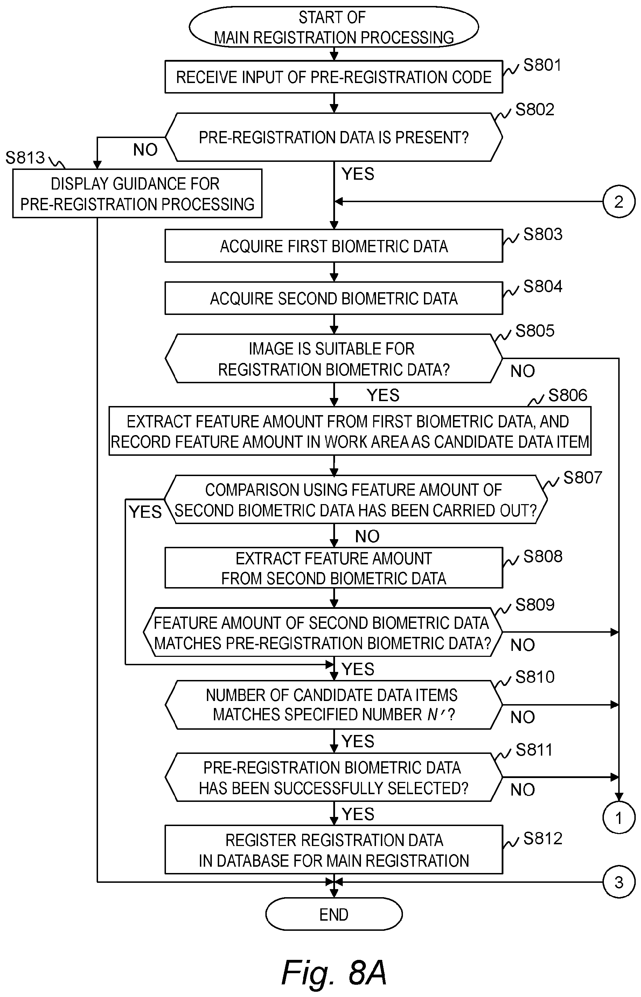

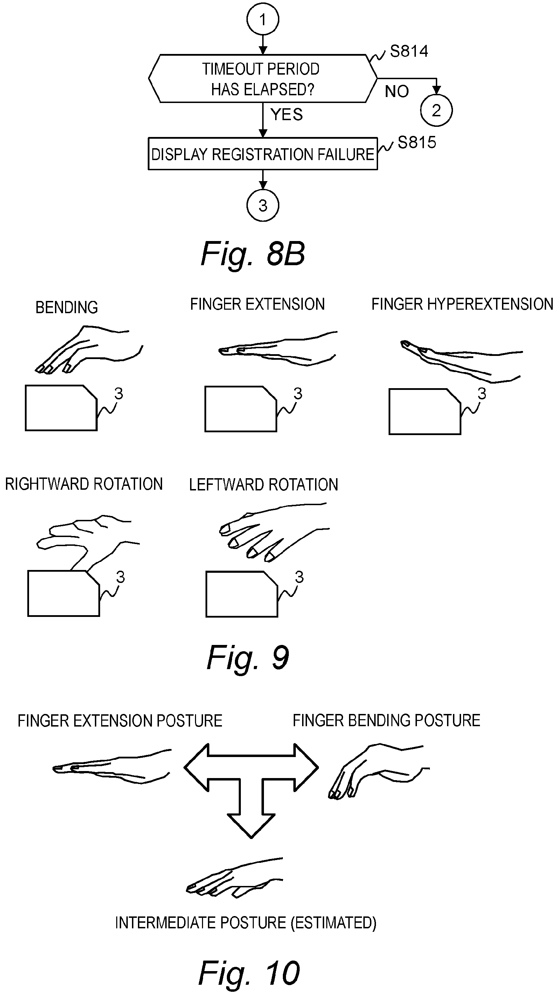

FIG. 8A and FIG. 8B are flow charts for illustrating an example of main registration processing in the first embodiment.

The biometric registration device 20 receives input of a pre-registration code from the main registration device 4 or an input device externally coupled to the main registration device 4 (S801).

The main registration processing module 300 searches the database 32 for pre-registration based on the pre-registration code, and determines whether or not the pre-registration data corresponding to the pre-registration code is present (S802).

When the pre-registration data is not present (when NO in S802), the main registration processing module 300 displays, on the main registration device 4, that the pre-registration processing is required (S813), and ends the main registration processing. For example, a QR code that directs the user to a pre-registration app or a QR code that directs the user to a pre-registration website may be displayed on the main registration device 4, or a URL to the pre-registration app and website may be transmitted to an email address of the registrant 1 input of which has been received.

When the pre-registration data is present (when YES in S802), the image pickup control module 302 controls camera parameters, light source intensity, and other settings of the main registration device 4 to acquire a hand/finger image as the first biometric data (S803).

The image pickup control module 302 controls the camera parameters, the light source intensity, and other settings of the main registration device 4 so as to facilitate the comparison to the pre-registration biometric data to acquire a hand/finger image as the second biometric data (S804).

In the hand/finger image picked up by the pre-registration device 3, blood vessels of the hand/fingers are often difficult to see, while patterns of wrinkles, melanin, and the like on the surface of the hand/fingers tend to be more noticeable. In this case, the image pickup control module 302 refers to image pickup information such as brightness, exposure, white balance, and light amount at the time of picking up the hand/finger image from which the pre-registration biometric data was extracted, and performs light source control and camera parameter adjustment to emit only the visible light so that the blood vessels are difficult to see and the wrinkles or the like of the epidermis are noticeable in the image pickup of the second biometric data.

The suitability determination module 303 determines whether the acquired hand/finger image is suitable for the registration biometric data based on the presence or absence of the hand/fingers, the posture of the hand/fingers, the brightness of the hand/finger image, the information amount of the biometric feature included in the hand/finger region, and the like which have been obtained by image processing or the like from the acquired hand/finger image (S805).

When it is determined that the acquired hand/finger image is not suitable for the registration biometric data (when NO in S805), the main registration processing module 300 determines whether or not a predetermined time (timeout period) has elapsed since the start of the main registration processing (S814).

When it is determined that the timeout period has not elapsed (when NO in S814), the main registration processing module 300 returns the process to S803 to again acquire the biometric data.

When it is determined that the timeout period has elapsed (when YES in S814), the main registration processing module 300 displays a registration failure (S815), and ends the registration processing.

When it is determined in S805 that the acquired hand/finger image is suitable for the registration biometric data (when YES in S805), the feature extraction module 304 extracts the feature amount from the first biometric data, and records the feature amount of the first biometric data in the work area as a candidate data item (S806).

The main registration processing module 300 determines whether or not comparison using the feature amount of the second biometric data has been carried out (S807). When the processing step of S807 is performed for the first time, the feature amount of the second biometric data has not been extracted, and hence it is determined that the comparison has not been carried out.

When it is determined that the comparison using the feature amount of the second biometric data has been carried out (when YES in S807), the main registration processing module 300 advances the process to S810.

When it is determined that the comparison using the feature amount of the second biometric data has not been carried out (when NO in S807), the feature amount of the second biometric data is extracted (S808).

The comparison processing module 305 compares the pre-registration biometric data included in the retrieved pre-registration data to the feature amount extracted from the second biometric data, and determines whether or not the feature amount matches the pre-registration biometric data (S809).

When the feature amount extracted from the second biometric data does not match the pre-registration biometric data (when NO in S809), the main registration processing module 300 determines whether the timeout period has elapsed (S814).

When it is determined that the timeout period has not elapsed (when NO in S814), the main registration processing module 300 returns the process to S803 to again acquire the biometric data.

When it is determined that the timeout period has elapsed (when YES in S814), the main registration processing module 300 displays a registration failure (S815), and ends the registration processing.

When, in S809, the feature amount extracted from the second biometric data matches the pre-registration biometric data (when YES in S809), the registration processing module 307 determines whether or not the number of candidate data items matches a specified number N' (S810).

When the number of candidate data items does not match the specified number N' (when NO in S810), the main registration processing module 300 determines whether or not the timeout period has elapsed (S814).

When it is determined that the timeout period has not elapsed (when NO in S814), the main registration processing module 300 returns the process to S803 to again acquire the biometric data.

When it is determined that the timeout period has elapsed (when YES in S814), the main registration processing module 300 displays a registration failure (S815), and ends the registration processing.

When, in S810, the number of candidate data items matches the specified number N' (when YES in S810), the comparison processing module 305 compares a plurality of candidate data items to examine whether or not reproducible data has been successfully acquired, and determines whether the registration biometric data can be selected from the plurality of candidate data items (S811).

In this processing, the registration biometric data that enables stable authentication is selected. For example, the N' candidate data items are compared to one another, and when it has been successfully confirmed that comparison results sufficiently match one another, a candidate data item that most matches the other candidate data items is selected as the registration biometric data.

When the registration biometric data has failed to be selected (when NO in S811), the main registration processing module 300 determines whether or not the timeout period has elapsed (S814).

When it is determined that the timeout period has not elapsed (when NO in S814), the main registration processing module 300 returns the process to S803 to again acquire the biometric data.

When it is determined that the timeout period has elapsed (when YES in S814), the main registration processing module 300 displays a registration failure (S815), and ends the registration processing.

When, in S811, the registration biometric data has been successfully determined (when YES in S811), the registration processing module 307 registers, in the database 31 for main registration, the registration data in which the selected registration biometric data and the personal information included in the retrieved pre-registration data are associated with each other (S812), and ends the registration processing.

In FIG. 8A and FIG. 8B, a specified number of first biometric data items are acquired, the first biometric data is selected when the feature amount extracted from the second biometric data acquired at the same timing as the first biometric data matches the pre-registration biometric data, and the registration data in which the feature amount extracted from the first biometric data and the personal information are associated with each other is registered. Therefore, there is a great advantage for the registrant that the registrant can register the pre-registered personal information together by simply performing the normal registration work for the first biometric data.

(Variation 1) In FIG. 8A and FIG. 8B, the registration is not completed unless the feature amount extracted from the second biometric data matches the pre-registration biometric data. In this processing procedure, when there is data corresponding to the input pre-registration code, the main registration processing module 300 may continue the main registration processing with consent of the registrant. For example, for a case in which S809 results in NO, there are provided a series of processing steps similar to S810 to S812 and a processing step of receiving input of consent information between S811 and S812. In the processing step of receiving input of the consent information, personal information to be registered or the like may be displayed on the display device 16 so that the registrant can input the consent information after confirming information including the full name and the address.

### [Second Embodiment]

In a second embodiment of this invention, a method of registering a plurality of pre-registration biometric data items extracted from images including various posture patterns in the biometric registration system 1000 is described. In the second embodiment, a smartphone is used as the pre-registration device 3.

The posture of the living body part has a large influence on matching of feature amounts of biometric data. Through comparison between a plurality of pre-registration biometric data items extracted from images of a predetermined living body part picked up in various posture patterns and the feature amount extracted from the second biometric data, the matching of the feature amounts of the biometric data becomes easier, and a time required for comparison processing can be reduced.

First, the pre-registration processing is described.

The personal information input module 201 receives input of the personal information from the registrant through use of the smartphone.

Subsequently, the image pickup control module 202 displays guidance on the smartphone so that hand/finger images of various posture patterns can be acquired in biometric image pickup. Examples of the various posture patterns include posture patterns of the hand/fingers illustrated in FIG. 9.

In the guidance display, the biometric registration device 20 may display guidance in real time when each hand/finger image is acquired, the guidance indicating which postures of the hand/fingers have been acquired and which remaining postures of the hand/fingers are to be acquired. This enables the registrant to be encouraged to more consciously present his or her hand/fingers in various postures for image pickup.

The image pickup control module 202 acquires the hand/finger images of various posture patterns while controlling the smartphone.

The suitability determination module 203 determines whether or not the acquired hand/finger image is suitable for the pre-registration biometric data.

When the acquired hand/finger image is suitable for the pre-registration biometric data, the feature extraction module 204 extracts the feature amount from the hand/finger image, and records the extracted feature amount in the work area as a candidate data item.

The pre-registration processing module 200 determines whether or not the number of recorded candidate data items matches the specified number N, and determines whether or not the acquired biometric data includes a predetermined posture pattern.

When the number of candidate data items does not match the specified number N, or when the acquired biometric data does not include the predetermined posture pattern, the pre-registration processing module 200 again picks up an image.

When the number of candidate data items matches the specified number N and the acquired biometric data includes the predetermined posture pattern, the pre-registration processing module 200 selects a plurality of pre-registration biometric data items from among the candidate data items.

The pre-registration processing module 200 registers, in the database 32 for pre-registration, the pre-registration data in which the selected plurality of pre-registration biometric data items and the personal information are associated with each other.

The pre-registration code output module 207 outputs the pre-registration code to the smartphone.

In addition to the posture patterns of the hand/fingers illustrated in FIG. 9, an image of an intermediate posture pattern between the respective postures of the hand/fingers may also be acquired as illustrated in FIG. 10.

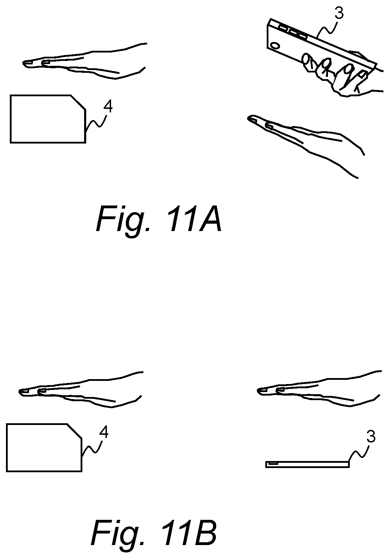

FIG. 11A and FIG. 11B are views for illustrating examples of an image pickup method for the hand/fingers in the second embodiment.

During the pre-registration, the registrant picks up an image of his or her hand/fingers through use of a rear camera while viewing a screen of the smartphone. As illustrated in FIG. 11A, the biometric registration device 20 picks up an image of the hand/fingers presented under the smartphone. Meanwhile, the main registration device 4 is often installed at the shop. Therefore, the biometric registration device 20 picks up an image of the hand/fingers held over the main registration device 4.

In this case, a difference in posture at the time of the image pickup is large due to the method of presenting the hand/fingers being different between the main registration and the pre-registration, thereby leading to a high possibility of a mismatch between the pre-registration biometric data and the feature amount extracted from the second biometric data.

In order to reduce the difference in posture at the time of the image pickup, for example, as illustrated in FIG. 11B, at the time of the pre-registration, the smartphone is placed on a level surface with a display portion thereof facing upward, and an image of the hand/fingers held over the smartphone is picked up through use of a built-in front camera thereof.

This increases the possibility that the postures of the hand/fingers in the biometric data items acquired from the respective devices are similar due to a state in which the method of presenting the hand/fingers at the time of the registration closely approximates that at the time of the pre-registration, and hence the pre-registration biometric data and the feature amount extracted from the second biometric data are more likely to match.

As a practice of presenting an ideal posture, the biometric registration device 20 may pick up an image of the living body part while displaying the guidance on the pre-registration device 3. The ideal posture is expected to be presented at the time of the main registration through the practice, and hence it is not required to perform processing in which the pre-registration biometric data and the second biometric data are used to select the biometric data of an ideal posture and register the first biometric data picked up at the same timing as the second biometric data. In other words, even without acquiring the pre-registration biometric data and the second biometric data, it is possible to register the first biometric data of the ideal posture at the time of the registration. However, this is limited, due to requirement to identify the personal information, to a case in which the pre-registration data can be identified through use of the pre-registration code.

In order to pick up images of the hand/fingers in mutually similar postures at the times of the pre-registration and the main registration as in FIG. 11B, the ideal posture is provided to the registrant as guidance information in the image pickup for the pre-registration. This increases the possibility that the hand/fingers are presented in a more ideal posture to the main registration device 4 at the time of the registration.

For example, when the hand/fingers of the registrant are presented as in FIG. 11B at the time of the pre-registration, the pre-registration processing module 200 displays, on the pre-registration device 3, a result of the determination as to whether or not the posture of the presented hand/fingers is ideal. While performing the pre-registration processing, the registrant can know how to present his or her fingers before the main registration, thereby increasing the possibility of presenting the fingers in the ideal posture at the time of the main registration. Therefore, a time required for the main registration can be reduced.

In the same manner as the pre-registration biometric data in the second embodiment, the biometric registration device 20 may acquire various posture pattern images of a predetermined living body part for the first biometric data and the second biometric data.

The acquisition of various posture patterns of a predetermined living body part for the second biometric data facilitates the matching to the pre-registration biometric data at the time of the main registration processing.

In addition, in a case in which the biometric data items of various posture patterns have been acquired as the first biometric data items or the second biometric data items, the acquired data items can be compared to each other to calculate what posture changes have occurred, and the posture of the living body part in each data item can be determined from a result of the calculation. For example, an image of the hand/fingers held straight can be determined as a data item closest to the ideal posture.

Specifically, a biometric data item close to the ideal posture can be determined without referring to another biometric data item. Therefore, even when the first biometric data is acquired at a different timing, the first biometric data estimated to be close to the ideal posture can be registered, and hence it is possible to achieve a highly accurate authentication system.

When it is possible to determine the pre-registration biometric data close to an ideal posture, the first biometric data acquired at the same timing as the second biometric data having the highest degree of matching with the pre-registration biometric data is predicted to be similarly in the ideal posture, and hence a highly accurate authentication system can be expected to be achieved.

As a processing flow, in addition to the determination as to whether or not the feature amount of the second biometric data and the pre-registration biometric data match in S809, the biometric registration device 20 calculates the degree of matching between the pre-registration biometric data in an ideal posture and the feature amount of the second biometric data. In the registration of the registration data in S812, the registration data including the feature amount of the first biometric data acquired at the same timing as the feature amount of the second biometric data having the highest degree of matching with the pre-registration biometric data in the ideal posture is registered.

### [Third Embodiment]

In a third embodiment of this invention, a registration method in a case in which there is a large difference between the feature amounts of data items acquired at the time of the pre-registration and at the time of the main registration in the biometric registration system 1000 is described.

In the third embodiment, a case in which a visible light image of the hand/fingers picked up through use of a smartphone is used for the pre-registration biometric data, an infrared image of the hand/fingers picked up by being irradiated with infrared light through use of the main registration device 4 is used as the first biometric data, and a visible light image of the hand/fingers picked up by being irradiated with visible light is used as the second biometric data is taken as an example.

In the infrared image, there is a case in which blood vessels become difficult to see due to an influence of a cold temperature or the like. Even when the blood vessels are difficult to see in the infrared image, it is desired to perform the authentication with high performance.

In view of this, it is assumed that blood vessels that can be observed in the visible light image pseudo-reproduce blood vessels that are easily and stably observed in the infrared image even when blood vessels become difficult to see due to, for example, the influence of a cold temperature, and based on this assumption, the first biometric data (infrared image) is registered through use of blood vessel patterns observed in the visible light image.

For example, it is determined whether or not the feature amount extracted from the second biometric data (visible light image) acquired at the time of the registration and the recorded pre-registration biometric data match, and then blood vessel patterns are extracted from each of the visible light image and a plurality of infrared images.

The blood vessel patterns extracted from the visible light image are compared to the blood vessel patterns extracted from each of the plurality of infrared images, and the infrared image including the largest number of blood vessel patterns extracted from the visible light image is registered for the registration data. In this manner, through registration of the infrared image including a large number of blood vessel patterns stably observed even in the visible light image, it is possible to achieve high-performance authentication in practical operation.

It is also possible to register the blood vessel patterns extracted from the visible light image so that the authentication can still be performed even when blood vessels are more difficult to see. However, the blood vessel patterns are difficult to see in the visible light image as described above, thereby causing the authentication to become more difficult when the blood vessels are clearly observed at the time of the biometric authentication. In view of this, the blood vessel patterns extracted from the infrared image including a large number of blood vessels and the blood vessel patterns extracted from the visible light image including few blood vessels are registered for the first biometric data (infrared image). Through registration of a plurality of sets of blood vessel patterns in this manner, it is possible to achieve highly accurate authentication in both a state in which the blood vessels are clearly visible and a state in which the blood vessels are difficult to see.

When only a few blood vessels are observed in the visible light image, the number of extracted blood vessel patterns is extremely small. When the number of blood vessel patterns extracted from the visible light image is small, there is a problem in that it becomes difficult to determine that the blood vessel patterns extracted from the infrared image and the blood vessel patterns extracted from the visible light image are the same biometric information.

**In** view of this, image processing or the like is used to perform expansion processing for a blood vessel region of each of the blood vessel patterns extracted from the visible light image so that it can be determine that the blood vessel patterns extracted from the visible light image and the blood vessel patterns extracted from the infrared image match and belong to the same living body.

By registering the blood vessel patterns subjected to the expansion processing for the blood vessel region instead of directly registering the blood vessel patterns extracted from the visible light image, it is possible to allow variation in blood vessel pattern amount when a plurality of sets of blood vessel patterns are registered, and also to ensure that the plurality of registration data items belong to the same living body.

## Claims

1. A biometric registration system, comprising:
a computing device;
a storage device coupled to the computing device; and
a network interface coupled to the computing device,
wherein the biometric registration system is coupled to a terminal owned by a user and a registration device installed at a shop of a business operator that provides a service using biometric authentication,
wherein the terminal includes a first acquisition device configured to acquire biometric data on the user,
wherein the registration device includes a second acquisition device configured to acquire biometric data on the user, and
wherein the biometric registration system is configured to:
receive input of personal information on the user from the terminal, and control the first acquisition device to acquire first biometric data on the user who has input the personal information;
extract a first feature amount from the first biometric data;
register, in the storage device, pre-registration data in which the personal information and the first feature amount are associated with each other;
control, in a case where a registration procedure using the registration device is started, the second acquisition device to acquire, from the user who performs the registration procedure, second biometric data for extracting a feature amount to be used for comparison to the first feature amount and third biometric data for extracting a feature amount to be used at a time of using the service;
extract a second feature amount and a third feature amount from the second biometric data and the third biometric data, respectively;
compare the first feature amount included in the pre-registration data and the second feature amount to each other; and
register, in the storage device, registration data in which the personal information included in the pre-registration data corresponding to the first feature amount that matches the second feature amount and the third feature amount are associated with each other.

2. The biometric registration system according to claim 1, wherein the biometric registration system is configured to control the second acquisition device while taking into consideration a condition for acquiring the first biometric data in the first acquisition device.

3. The biometric registration system according to claim 2, wherein the first biometric data, the second biometric data, and the third biometric data each is an image of a living body part.

4. The biometric registration system according to claim 3,
wherein the first acquisition device is configured to emit visible light to acquire the image of the living body part,
wherein the second acquisition device is configured to emit at least any one of visible light or infrared light to acquire the image of the living body part, and
wherein the biometric registration system is configured to:
control the first acquisition device to acquire, as the first biometric data, the image of the living body part acquired by the first acquisition device;
control the second acquisition device so as to emit the visible light to acquire, as the second biometric data, the image of the living body part acquired by the second acquisition device; and
control the second acquisition device so as to emit the infrared light to acquire, as the third biometric data, the image of the living body part acquired by the second acquisition device.

5. The biometric registration system according to claim 3,
wherein the first acquisition device is configured to emit visible light to acquire the image of the living body part,
wherein the second acquisition device is configured to emit at least any one of visible light or infrared light to acquire the image of the living body part, and
wherein the biometric registration system is configured to:
control the first acquisition device to acquire, as the first biometric data, the image of the living body part acquired by the first acquisition device;
control the second acquisition device so as to simultaneously emit the infrared light and the visible light to acquire the image of the living body part acquired by the second acquisition device; and
execute wavelength separation processing on the image of the living body part acquired from the second acquisition device, to thereby acquire the image of the living body part in the visible light as the second biometric data and acquire the image of the living body part of the infrared light as the third biometric data.

6. The biometric registration system according to claim 2, wherein the biometric registration system is configured to:
generate a pre-registration code in a case where the pre-registration data is registered;
register, in the storage device, the pre-registration data in which the personal information, the first feature amount, and the pre-registration code are associated with one another;
notify the terminal of the pre-registration code;
receive input of the pre-registration code in the registration procedure;
search the pre-registration data stored in the storage device based on the input pre-registration code; and
compare the first feature amount included in the pre-registration data corresponding to the input pre-registration code and the second feature amount to each other.

7. The biometric registration system according to claim 2, wherein the biometric registration system is configured to:
acquire a plurality of pieces of first biometric data;
register, in the storage device, the pre-registration data in which the personal information and a plurality of first feature amounts extracted from each of the plurality of pieces of first biometric data are associated with each other; and
compare each of the plurality of first feature amounts included in the pre-registration data and the second feature amount to each other.

8. The biometric registration system according to claim 7,
wherein the first biometric data, the second biometric data, and the third biometric data each is an image of a living body part
wherein the plurality of pieces of first biometric data differ in posture of the living body part in an image of the living body part.

9. The biometric registration system according to claim 8, wherein the biometric registration system is configured to display, on the terminal, guidance information for instructing the user to present the living body part in a different posture.

10. The biometric registration system according to claim 2, wherein the biometric registration system is configured to:
acquire a plurality of first biometric data items; and
compare the plurality of first biometric data items to one another, and select one of the plurality of first biometric data items based on a result of the comparing.

11. A biometric registration method to be executed by a biometric registration system,
the biometric registration system including a computing device, a storage device coupled to the computing device, and a network interface coupled to the computing device,
the biometric registration system being coupled to a terminal owned by a user and a registration device installed at a shop of a business operator that provides a service using biometric authentication,
the terminal including a first acquisition device configured to acquire biometric data on the user,
the registration device including a second acquisition device configured to acquire biometric data on the user,
the biometric registration method comprising:
receiving, by the biometric registration system, input of personal information on the user from the terminal, and controlling the first acquisition device to acquire first biometric data on the user who has input the personal information;
extracting, by the biometric registration system, a first feature amount from the first biometric data;
registering, by the biometric registration system, in the storage device, pre-registration data in which the personal information and the first feature amount are associated with each other;
controlling, by the biometric registration system, in a case where a registration procedure using the registration device is started, the second acquisition device to acquire, from the user who performs the registration procedure, second biometric data for extracting a feature amount to be used for comparison to the first feature amount and third biometric data for extracting a feature amount to be used at a time of using the service;
extracting, by the biometric registration system, a second feature amount and a third feature amount from the second biometric data and the third biometric data, respectively;
comparing, by the biometric registration system, the first feature amount included in the pre-registration data and the second feature amount to each other; and
registering, by the biometric registration system, in the storage device, registration data in which the personal information included in the pre-registration data corresponding to the first feature amount that matches the second feature amount and the third feature amount are associated with each other.
